# DEMANDE DE BREVET EUROPEEN

(11) **EP 4 538 031 A1**
(43) Date de publication de la demande: **16.04.2025**
(21) Numéro de dépôt: 23202754.0
(22) Date de dépôt: 10.10.2023
(51) Int. Cl.: B32B 18/00, C04B 35/117, C04B 35/488, C04B 35/56, C04B 35/565, C04B 35/58, C04B 35/587, C04B 35/645

(54) **ARTICLE EN CÉRAMIQUE AVEC UN GRADIENT DE COULEURS ET SON PROCÉDÉ DE FABRICATION**

(71) Demandeur: Omega SA, 2502 Bienne (CH)
(72) Inventeur: NETUSCHILL, Alexandre, 2414 Le Cerneux-Péquignot (CH); RETROUVEY, Sébastien, 39380 Chissey sur Loue (FR); ACTIS-DATTA, Arnaud, 2854 Bassecourt (CH); VUILLE, Pierry, 2338 Les Emibois (CH); OIAN, Nicolas, 1971 Grimisuat (CH); Gregory KISSLING, 2520 La Neuveville (CH)
(74) Mandataire: ICB SA

(57) **Abrégé**

L'invention concerne un article en céramique avec un gradient de couleur, et en particulier une lunette (1) d'une pièce d'horlogerie, réalisé par un procédé d'injection d'au moins deux matières céramiques (2,3) de couleurs distinctes, les matières céramiques étant mélangées dans différents rapport de poids pour créer plusieurs matières mélangées formant un gradient de couleur.

## Description

### DOMAINE TECHNIQUE

La présente invention se rapporte à un article en céramique. Elle se rapporte plus particulièrement à un composant horloger tel qu'une lunette, réalisé par pressage uniaxial de matières céramiques de couleurs différentes formant un dégradé de couleurs pour décorer du composant horloger.

### ART ANTERIEUR

Les composants horlogers en céramique ou en cermet sont généralement obtenus par un procédé d'injection ou un procédé de pressage uniaxial ou isostatique d'une matière suivi d'un frittage. Ces composants présentent souvent un décor, tel que des index et des chiffres pour une lunette, qui est de couleur distincte du reste du composant, ou tout simplement une décoration bicolore dans la masse. Les éléments du décor sont généralement rapportés par brasage ou collage sur l'ébauche issue du frittage. Cet assemblage mécanique entre l'ébauche et les éléments du décor peut se révéler coûteux et compliqué à mettre en oeuvre.

Une alternative à cet assemblage mécanique consiste à réaliser une ébauche par injection de matières de couleurs différentes avec une couleur destinée à former le décor après usinage. Cependant, fabriquer des composants en céramique ou en cermet avec des couleurs différentes s'avère complexe. En effet, un retrait important, qui peut s'élever à 30%, est observé lors du frittage. Le taux de retrait va être dépendant de plusieurs facteurs qui sont entre autres le choix du matériau et le volume de matière injectée. Il peut s'ensuivre dans les procédés bi-injection ou de manière plus générale multi-injection, des différences de retrait lors du frittage qui vont mener à une désolidarisation à la jonction entre les différentes matières.

Pour pallier à cet inconvénient, il a été proposé dans le document EP 2 746 243 de former un corps vert et d'imprégner une partie de ce corps vert avant frittage avec une solution comprenant un métal agissant comme pigment. Ce procédé présente cependant pour désavantage qu'il est difficile d'obtenir une couleur uniforme dans la masse de la partie colorée.

On connait également du document EP 2 965 713 un procédé pour obtenir une matière céramique avec un dégradé de couleur et former une prothèse dentaire. Cependant, un tel procédé utilise un pressage isostatique qui est généralement long et contraignant. De plus, un tel procédé n'est pas applicable industriellement pour de gros volumes de production.

### RESUME DE L'INVENTION

La présente invention a pour objet de pallier aux désavantages précités en proposant un nouveau procédé de pressage uniaxial permettant d'obtenir un article en céramique avec un gradient de couleur.

A cet effet, la présente invention se rapporte à un procédé de fabrication d'un article en céramique avec un gradient de couleur.

Plus précisément, le procédé de fabrication de l'article selon l'invention comporte les étapes suivantes :
- mise à disposition d'au moins une première matière céramique et une seconde matière céramique, la première matière céramique se distinguant de la seconde matière céramique par sa couleur ;
- mise à disposition d'un sabot munis de compartiments ;
- préparer une pluralité de matières mélangées dans lesquelles la première matière céramique et la seconde matière céramique sont mélangées dans différents rapport de poids en faisant varier le rapport de poids pour former un gradient de couleurs souhaité ;
- déposer les matières dans les compartiments du sabot selon un ordre croissant ou décroissant en fonction du rapport de poids ;
- mise à disposition d'une empreinte sur le sabot ;
- remplir l'empreinte avec les matières mélangées déposées dans le sabot ;
- retirer le sabot et presser uniaxialement les matières mélangées pour former un corps vert ;
- délianter le corps vert pour obtenir un corps brun ;
- fritter le corps brun pour former une ébauche ;
- usiner l'ébauche obtenue pour obtenir l'article en céramique avec un gradient de couleur.

La présente invention se rapporte également à l'article en céramique issu du procédé de fabrication.

Conformément à d'autres variantes avantageuses de l'invention :
- la première matière céramique et la seconde matière céramique comprennent au choix : une poudre d'un oxyde de zirconium, d'un oxyde d'aluminium, d'un nitrure de titane, d'un nitrure de silicium, d'un carbure de titane, d'un carbure de chrome, d'un carbure de tungstène ou d'un mélange d'au moins deux de ces poudres ;
- la première matière céramique et la seconde matière céramique comprennent chacune un pigment distinct donnant une couleur différente à la première matière céramique et à la seconde matière céramique ;
- le pigment est un oxyde métallique ou un spinelle ;
- le pigment est choisi parmi un oxyde de chrome, un oxyde de cobalt, un oxyde de fer, un oxyde de titane, un oxyde de manganèse, un oxyde de molybdène, un oxyde de cérium, un oxyde de vanadium, un oxyde de zinc, un oxyde d'aluminium ou un mélange de ces oxydes ;
- le pigment est un spinelle de cobalt/fer/chrome ou un spinelle de cobalt/aluminium ;
- la première poudre céramique et la seconde poudre céramique comprennent chacune un liant ;
- l'étape de déliantage est un déliantage thermique ;
- l'étape de frittage est effectué à une température comprise entre 1200°C et 1800°C pendant un temps compris entre 30 minutes et 20 heures ;
- l'étape de frittage est effectué dans un environnement oxydant ou réducteur.

L'invention concerne également un article en céramique présentant un gradient de couleurs.

L'article selon l'invention comprend plusieurs matières céramiques distinctes se différentiant par leur couleur, de manière plus générale par leur aspect esthétique. Selon l'invention, l'article décoré est monobloc et sans discontinuité entre les matières céramiques de l'article de manière à obtenir un gradient de couleur.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

- La figure 1 représente une vue en perspective d'un sabot utilisé pour le procédé de fabrication selon l'invention.
- Les figures 2a et 2b illustrent respectivement une vue en perspective et une vue de dessus d'une empreinte utilisée pour le procédé de fabrication selon l'invention.
- Les figures 3a et 3b illustrent des exemples de réalisation d'articles en céramique présentant un dégradé de couleurs obtenu au moyen du procédé de fabrication selon l'invention.

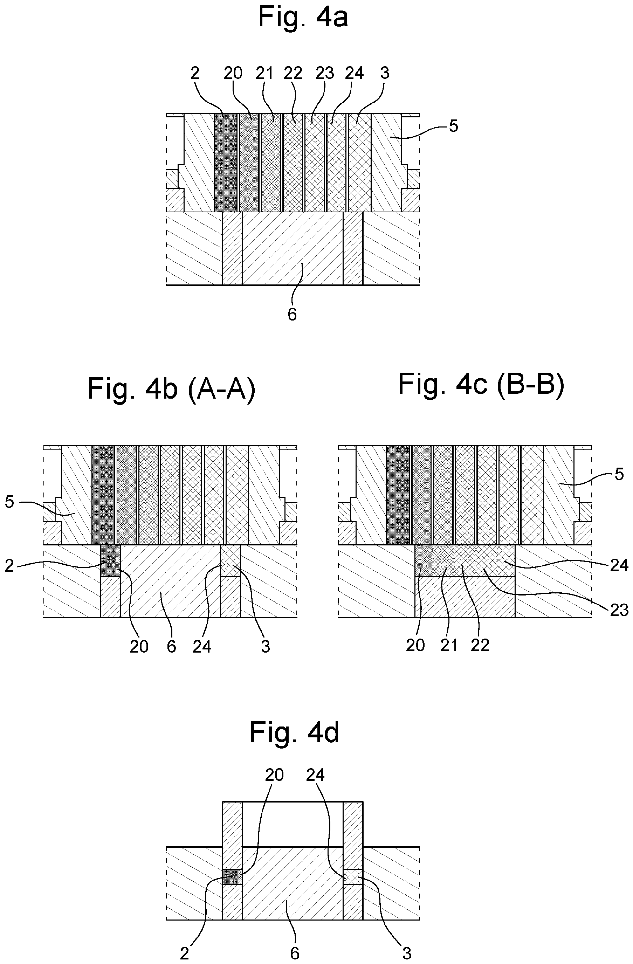

- Les figures 4a à 4d illustrent les différentes étapes du procédé de fabrication selon l'invention.

### DESCRIPTION DETAILLEE

La présente invention se rapporte à un article en céramique tel qu'un composant d'habillage en horlogerie ou en bijouterie, ou encore un composant horloger présentant dans sa masse un gradient de couleur. On entend par gradient de couleurs, un dégradé de couleur avec au moins deux couleurs servant de base pour la création du dégradé. Bien évidemment, le dégradé de couleur peut comporter plus de deux couleurs de base.

Le composant selon l'invention est en céramique. Il peut, à titre d'exemple, s'agir d'un oxyde de zirconium, d'aluminium, d'un nitrure de titane, de silicium ou encore d'un carbure tel qu'un carbure de titane, un carbure de chrome ou un carbure de tungstène ou encore d'un mélange de ces céramiques.

Au moins un des matières céramiques comprend un pigment colorant la matière. Le pigment est un oxyde métallique ou un spinelle choisi selon la couleur souhaitée. On peut citer l'oxyde de chrome, l'oxyde de cobalt, l'oxyde de fer, l'oxyde de titane, l'oxyde de manganèse, l'oxyde de zinc, l'oxyde de molybdène, l'oxyde de cérium, l'oxyde de vanadium, l'oxyde d'aluminium ou un mélange de ces oxydes tels que, par exemple, un oxyde de fer/chrome. A titre d'exemple, pour une couleur bleue le pigment peut être un oxyde de cobalt, pour une couleur verte le pigment peut être un oxyde de chrome, pour une couleur brune le pigment peut être un oxyde de fer.

L'article selon l'invention peut également être un article décoratif tel qu'un élément constitutif de montres, bijoux, bracelets, etc. Dans le domaine horloger, cet article peut être un composant d'habillage tel qu'une carrure, un fond, une lunette, un insert de lunette, un poussoir, une couronne, un maillon de bracelet, un fermoir, une boucle, un cadran, une aiguille, un index de cadran, etc. Il peut également s'agir d'un composant du mouvement tel qu'une masse oscillante, une platine, etc. A titre illustratif, l'article est une lunette 1 réalisée avec des céramiques de couleurs différentes, par exemple avec un gradient allant de la couleur noire au bleu turquoise. Toujours à titre d'exemple, il pourrait s'agir d'un sigle sur une couronne de montre ou même d'un index sur une lunette.

L'article est réalisé par injection des matières différentes pour former un corps vert et par frittage dudit corps vert. Le procédé de fabrication est illustré ci-après pour un article comprenant sept matières successives de couleurs distinctes mais il pourrait s'agir d'un article comprenant deux, trois, quatre, etc. matières de couleurs et/ou de composition différentes pour chacune des matières successives injectées.

Le procédé de fabrication par pressage uniaxial comporte les étapes suivantes en référence aux figures :
- mise à disposition d'au moins une première matière céramique 2 et une seconde matière céramique 3, la première matière se distinguant de la seconde matière par sa couleur et donc par sa composition chimique ;
- préparer une pluralité de matières mélangées 20, 21, 22, 23, 24 dans lesquelles la première matière céramique 2 et la seconde matière céramique 3 sont mélangées dans différents rapport de poids en faisant varier le rapport de poids pour former un dégradé de couleurs souhaité. Ainsi, dans le cas de deux matières céramiques, les matières mélangées peuvent voir un rapport en poids de 100/0, 90/10, 80/20, 70/30, 60/40, 50/50, 40/60, 30/70, 20/80, 10/90, 0/100, etc... Un homme du métier n'aura aucune difficulté à utiliser plus de deux matières céramiques, trois, quatre ou cinq matières céramiques par exemple, pour obtenir les couleurs souhaitées et le gradient de couleur souhaité ;

- mise à disposition d'un sabot 5 comprenant des compartiments agencés pour recevoir les mélanges de matières céramiques 20, 21, 22, 23, 24. Le nombre de compartiments présents dans le sabot 5 dépend du gradient final souhaité ;
- mise en place d'une empreinte 6 sur le sabot 5;
- remplir l'empreinte 6 avec les matières mélangées déposées dans les compartiments du sabot selon un ordre croissant ou décroissant en fonction du rapport de poids ou du gradient souhaité. La hauteur des matières mélangées déposées dans les compartiments est au minimum de 0.5 mm et ne dépasse pas la hauteur du sabot ;
- retirer le sabot 5 et presser uniaxialement les matières mélangées pour former un corps vert 7 ;
- délianter le corps vert 7 pour former un corps brun ;
- fritter le corps brun pour former une ébauche ;
- effectuer une étape de finition de l'ébauche pour former l'article 1.

Il est possible d'empiler plusieurs couches de matières céramiques mélangées pour former une disposition particulière de couleurs visible depuis les côtés de l'article.

Les compartiments du sabot peuvent aussi bien être rectilignes ou non rectilignes en fonction des besoins de l'homme du métier et du motif souhaité.

La matière céramique peut être majoritairement de la poudre céramique ou un feedstock qui est un mélange d'une poudre céramique et d'un liant organique.

Dans le cas où un feeedstock est utilisé pour former les matières mélangées, une étape de déliantage est nécessaire avant le frittage du corps vert 8. Le déliantage peut être réalisé dans un solvant pour enlever des matières telles que la cire, la paraffine, etc. Il peut être suivi d'un déliantage thermique dans une gamme de températures comprises entre 100 et 800°C.

Le frittage du corps brun est effectué dans une gamme de températures comprises entre 1200 et 1800°C, et, de préférence, entre 1350 et 1450°C pendant un temps compris entre 30 minutes et 20 heures. Il est connu de l'homme du métier que chaque couleur a une température optimale et un temps de frittage optimal lors du frittage pour que la couleur ressorte bien une fois le frittage terminé. Ainsi, dans le cas de la réalisation d'un dégradé, il est particulièrement intéressant de choisir des couleurs ayant une température et un temps de frittage proche et effectuer un frittage à une température qui est la moyenne des températures de frittage idéales des couleurs choisies.

De préférence, la température est augmentée jusqu'à la température de frittage à atteindre à raison de 100°C à 200°C par heure. Une fois le frittage terminé la température est abaissé graduellement à raison de 100°C à 200°C par heure.

Le frittage est effectué dans un environnement oxydant ou réducteur. Le frittage peut par exemple être réalisé sous une atmosphère oxygénée, atmosphère oxygénée pouvant être de l'air ordinaire, ou une atmosphère créée artificiellement en combinant de l'oxygène et d'autres gaz. L'atmosphère oxygénée peut être statique, ou il peut y avoir un flux constant ou intermittent de gaz.

Selon les besoins de l'homme du métier, plusieurs frittages peuvent être effectués pour atteindre le résultat souhaité.

Pour former une lunette, l'ébauche est usinée aux dimensions de l'article souhaité.

Le procédé peut comprendre un usinage par ablation laser pour former des décors dans l'article. Les décors peuvent consister en des index, une graduation ou un logo par exemple.

Après l'usinage par ablation laser, le procédé de fabrication comporte une étape de finition telle que du polissage, du satinage, de la matification, etc. L'usinage post-frittage permet également de faire apparaitre plus nettement le dégradé de couleurs ou un schéma particulier en fonction de la coupe de la pièce.

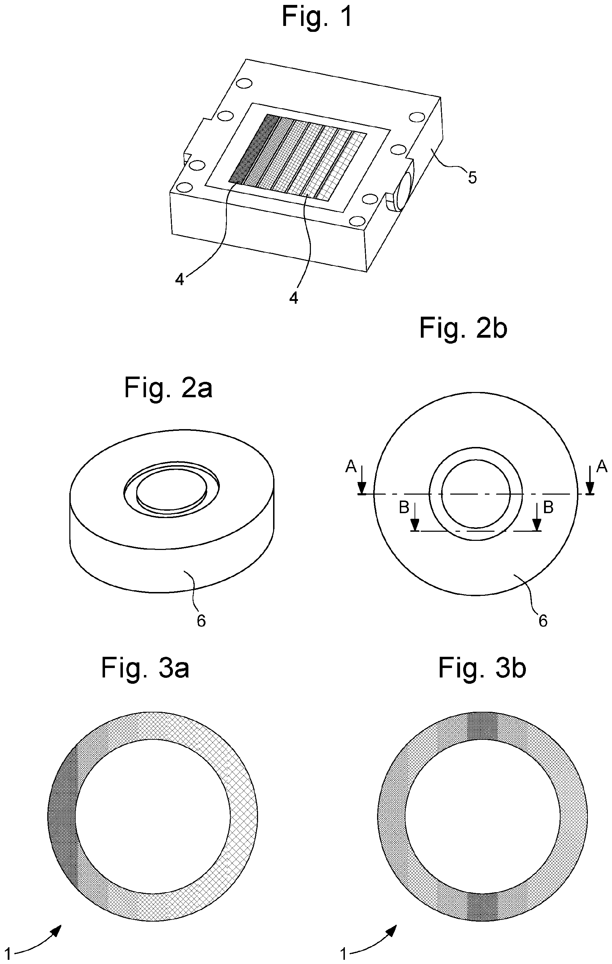

Typiquement, une lunette 1 selon les figures 3a et 3b est obtenue via le procédé selon l'invention, la lunette présentant un gradient de couleur allant du noir au bleu turquoise. Bien évidemment, d'autres gradients à base d'autres couleurs peuvent être obtenus grâce au procédé.

## Revendications

1. Procédé de fabrication par pressage uniaxial d'un article en céramique avec un gradient de couleur, ledit procédé comprenant les étapes suivantes :
- mise à disposition d'au moins une première matière céramique (2) et une seconde matière céramique (3), la première matière céramique (2) se distinguant de la seconde matière céramique (3) par sa couleur ;
- mise à disposition d'un sabot (5) munis de compartiments (4);
- préparer une pluralité de matières mélangées (20, 21, 22, 23, 24) dans lesquelles la première matière céramique (2) et la seconde matière céramique (3) sont mélangées dans différents rapport de poids en faisant varier le rapport de poids pour former un gradient de couleurs souhaité ;
- déposer les matières dans les compartiments du sabot selon un ordre croissant ou décroissant en fonction du rapport de poids ;
- mise à disposition d'une empreinte (6) sur le sabot (5) ;
- remplir l'empreinte (6) avec les matières mélangées déposées dans le sabot (5) ;
- retirer le sabot et compacter les matières mélangées pour former un corps vert (7) ;
- délianter le corps vert (7) pour obtenir un corps brun ;
- fritter le corps brun pour former une ébauche ;
- usiner l'ébauche (8) obtenue pour obtenir l'article (1) en céramique avec un gradient de couleur.

2. Procédé de fabrication selon la revendication 1, **caractérisé en ce que** la première matière céramique (2) et la seconde matière céramique (3) comprennent au choix : une poudre d'un oxyde de zirconium, d'un oxyde d'aluminium, d'un nitrure de titane, d'un nitrure de silicium, d'un carbure de titane, d'un carbure de chrome, d'un carbure de tungstène ou d'un mélange d'au moins deux de ces poudres.

3. Procédé de fabrication selon la revendication 1 ou 2, **caractérisé en ce que** la première matière céramique (2) et la seconde matière céramique (3) comprennent chacune un pigment distinct donnant une couleur différente à la première matière céramique (2) et à la seconde matière céramique (3).

4. Procédé selon l'une des revendications précédentes, **caractérisé en ce que** le pigment est un oxyde métallique ou un spinelle.

5. Procédé selon la revendication 4, **caractérisé en ce que** le pigment est choisi parmi un oxyde de chrome, un oxyde de cobalt, un oxyde de fer, un oxyde de titane, un oxyde de manganèse, un oxyde de molybdène, un oxyde de cérium, un oxyde de vanadium, un oxyde de zinc, un oxyde d'aluminium ou un mélange de ces oxydes.

6. Procédé selon la revendication 4, **caractérisé en ce que** le pigment est un spinelle de cobalt/fer/chrome ou un spinelle de cobalt/aluminium.

7. Procédé selon l'une des revendications précédentes, **caractérisé en ce que** la première poudre céramique (2) et la seconde poudre céramique (3) comprennent chacune un liant.

8. Procédé selon la revendication 7, **caractérisé en ce que** l'étape de déliantage est un déliantage thermique.

9. Procédé selon l'une des revendications précédentes, **caractérisé en ce que** l'étape de frittage est effectué à une température comprise entre 1200°C et 1800°C pendant un temps compris entre 30 minutes et 20 heures.

10. Procédé selon l'une des revendications précédentes, **caractérisé en ce que** l'étape de frittage est effectué dans un environnement oxydant ou réducteur.

11. Article en céramique **caractérisé en ce qu'**il présente un gradient de couleurs.

12. Article selon la revendication 11, **caractérisé en ce que** l'article est un composant horloger d'habillage ou du mouvement.

13. Article selon la revendication 11 ou 12, **caractérisé en ce que** le composant horloger d'habillage ou du mouvement est choisi parmi la liste comprenant une carrure, un fond, une lunette, un insert de lunette, un poussoir, une couronne, un maillon de bracelet, une boucle, un cadran, une aiguille, un index de cadran, une masse oscillante et une platine.
